# FASCICULE DE BREVET EUROPEEN

(11) **EP 2 103 011 B1**
(45) Date de publication et mention de la délivrance du brevet: **12.05.2010**
(21) Numéro de dépôt: 07871934.1
(22) Date de dépôt: 14.12.2007
(51) Int. Cl.: H04B 10/158, H04B 10/18, H04J 3/14, H04J 3/16

(54) **PROCEDE ET DISPOSITIF DE TRAITEMENT D'UN SIGNAL OPTIQUE, EQUIPEMENT CENTRAL ET RESEAU D'ACCES ASSOCIES**
VERFAHREN UND VORRICHTUNG ZUR VERARBEITUNG OPTISCHER SIGNALE, ENTSPRECHENDE ZENTRALEINHEIT UND ZUGANGSNETZWERK DAFÜR
OPTICAL SIGNAL PROCESSING METHOD AND DEVICE, ASSOCIATED CENTRAL EQUIPMENT AND ACCESS NETWORK

(30) Priorité: 22.12.2006 FR 0655851
(43) Date de publication de la demande: 23.09.2009
(73) Titulaire: FRANCE TELECOM, 75015 Paris (FR)
(72) Inventeur: CHANCLOU, Philippe, F-22300 Lannion (FR); POIRRIER, Julien, F-22300 Locquemeau (FR); PAYOUX, Franck, 92220 BAGNEUX (FR)
(74) Mandataire: Benetiere, Marion
(86) Numéro de dépôt international: PCT/FR2007/052512
(87) Numéro de publication internationale: WO 2008/081140

(56) Documents cités:
- EP-A1- 1 508 983
- JP-A- 4 035 330
- BUCHALI F ET AL: "Adaptive PMD Compensation by Electrical and Optical Techniques" JOURNAL OF LIGHTWAVE TECHNOLOGY, XX, XX, vol. 22, no. 4, avril 2004 (2004-04), pages 1116-1126, XP011111648 ISSN: 0733-8724 cité dans la demande

## Description

### 1. Domaine de l'invention

La présente invention concerne de manière générale le domaine des télécommunications, et plus particulièrement des télécommunications optiques.

L'invention trouve son application dans les réseaux d'accès optiques, et plus particulièrement dans les réseaux d'accès partagés qui utilisent un multiplexage en temps (TDM pour Time Division Multiplexing, ou en français "multiplexage par division temporelle") pour permettre l'échange d'informations entre différents équipements d'extrémité et un équipement central situé dans un noeud du réseau d'accès.

### 2. Art antérieur

Le multiplexage TDM est la solution de multiplexage actuellement la plus communément mise en oeuvre sur un réseau d'accès en fibre optique passif partagé de type 1 vers N dans lequel un équipement central communique avec N équipements terminaux. Ce multiplexage temporel est réalisé par un coupleur dont les caractéristiques et l'intégration ne posent plus de problèmes de conception aujourd'hui.

Sur un tel réseau d'accès, les données sont transmises de façon bidirectionnelle. La simultanéité des sens de transmission descendant et remontant est permise par une division en longueur d'onde des sens descendant (1,49 µm) et remontant (1,31 µm).

Lorsque des données sont transmises dans le sens descendant, c'est-à-dire du central vers une pluralité d'équipements terminaux, on utilise un signal composé de N intervalles temporels contigus chacun contenant des données destinées à l'un des N équipements terminaux. Ce signal est un multiplex temporel. Les signaux comportent également des intervalles temporels de gestion communs à tous les équipements terminaux. Ces intervalles temporels de gestion contiennent des informations de configuration et de gestion des données. Un dispositif tel qu'un coupleur, situé dans un noeud d'accès permet de diffuser le signal vers chacun des N équipements terminaux destinataires afin que chacun puisse recevoir la portion de signal qui le concerne.

Lorsque des données sont transmises dans le sens remontant, c'est-à-dire des équipements terminaux vers le central, le signal reçu par le noeud d'accès est également découpé en intervalles temporels correspondant aux émissions de chacun des N équipements terminaux. Ce signal est un signal optique multiplex temporel des différents signaux optiques émis individuellement par chaque équipement terminal. Afin de pouvoir réaliser ce signal optique composite, il est nécessaire que chaque équipement terminal émette son signal optique avec le même débit que les autres équipements terminaux. Il est également important que les différents intervalles temporels ne se chevauchent pas afin d'éviter une perte des données transportées lors de la création du signal composite.

### 3. Inconvénients de l'art antérieur

L'évolution des systèmes de transmission des réseaux d'accès optique suit deux tendances :
- la montée en débit des réseaux d'accès optiques pour atteindre typiquement 10 Gbits/s;
- l'augmentation de la portée au-delà de 20 km.

De telles évolutions entraînent des pénalités sur la transmission du signal optique. Un traitement du signal optique transmis devient donc nécessaire, afin de corriger ces pénalités introduites lors de la transmission. Des techniques de traitement du signal optique connues permettent de corriger de telles pénalités introduites lors de la transmission d'un signal optique dans une liaison point à point. Un dispositif mettant en oeuvre de telles techniques utilise un apprentissage des paramètres caractéristiques de performances du canal de transmission à partir de signaux optiques précédemment transmis. Un tel dispositif n'est pas adapté à un signal optique multiplex temporel transmis dans une liaison 1 vers N. En effet, un signal optique multiplex temporel est formé d'une séquence de secteurs temporels acheminés par des canaux de transmission différents. Les paramètres caractéristiques de performances du canal de transmission sont donc susceptibles de changer pour chaque secteur temporel. Or, selon le document intitulé "Adaptive PMD compensation by optical and electrical techniques", par Buchali et Bülow, publié dans la revue "Journal of Lightwave Technology", Volume 22, Issue 4, en avril 2004, il est difficile pour un tel dispositif de s'adapter en moins d'une milliseconde. Par conséquent, entre un premier et un deuxième secteurs temporels, le dispositif précédent n'a pas le temps d'apprendre les paramètres caractéristiques de performances du deuxième secteur temporel.

Le document JP 04 035 330 A décrit un procédé selon la préambule de la revendication 1.

### 4. Exposé de l'invention

Il existe un besoin de fournir une solution pour corriger le signal optique multiplex temporel transmis afin de corriger les pénalités introduites lors de sa transmission dans une liaison 1 vers N.

Plus précisément, un objectif de l'invention est de fournir une solution pour corriger le signal optique multiplex temporel transmis qui s'adapte à des paramètres de transmission susceptibles de varier pour les secteurs temporels successifs formant ce signal optique composite.

Ces objectifs, ainsi que d'autres qui apparaîtront par la suite, sont atteints à l'aide d'un procédé de traitement d'un signal optique composite formé d'une séquence de secteurs temporels obtenus par multiplexage temporel d'une pluralité de signaux optiques transmis sur une pluralité de canaux de transmission d'un réseau d'accès optique partagé.

Selon l'invention, ledit procédé de traitement comprend les étapes suivantes :
- prise en compte d'un calendrier d'émission de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel; et
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

Ainsi, l'invention repose sur une approche tout à fait nouvelle et inventive du traitement adaptatif des signaux optiques composites formés par multiplexage temporel d'une pluralité de signaux optiques véhiculés sur un réseau d'accès optique passif. En effet, l'invention propose d'utiliser le calendrier d'émission de ladite pluralité de signaux optiques pour accéder aux paramètres représentatifs de performances du canal de transmission emprunté par chaque secteur temporel du signal optique composite considéré et en déduire une correction adaptée à chaque secteur temporel.

L'invention permet ainsi de résoudre le problème technique de l'adaptation d'une fonction de traitement de signal à des changements rapides d'un signal composé d'une séquence de secteurs temporels transmis sur une pluralité de canaux de transmission différents.

Le calendrier d'émission fait correspondre à un secteur temporel le signal optique dont il provient et le canal de transmission qui l'achemine. Le terme "canal de transmission" est utilisé ici pour désigner de façon générique le chemin formé d'un canal ou d'une succession de canaux de transmission que le secteur temporel emprunte de sa source jusqu'à sa destination.

Un tel ensemble de paramètres permet de caractériser le canal de transmission emprunté par le secteur temporel considéré, d'en déduire des paramètres de traitement adaptés et donc d'appliquer au secteur temporel un traitement sur la base de ces paramètres.

Selon un autre aspect de l'invention, ladite étape de correction adaptative utilise un ensemble de valeurs moyennes de paramètres de traitement calculé pour la pluralité de signaux optiques. En d'autres termes, un même ensemble de paramètres de traitement est calculé pour tous les secteurs temporels du signal optique composite. Cet ensemble de paramètres de traitement prend en compte les ensembles de valeurs de paramètres représentatifs des performances de la pluralité de canaux de transmission. Un avantage de cette solution est sa simplicité et sa faible consommation de ressources. En effet, un seul ensemble de valeurs de paramètres de transmission est stocké en mémoire.

De façon avantageuse, l'ensemble de valeurs de paramètres de traitement calculé est spécifique à un signal optique. Cela signifie que l'on associe aux secteurs temporels correspondants à un même signal optique un ensemble de valeurs de paramètres spécifiquement calculé. Un avantage de cette solution est sa précision. Chaque secteur temporel du signal optique composite se voit spécifiquement traité.

Selon un autre aspect de l'invention, les valeurs desdits paramètres représentatifs de performances de ladite pluralité de canaux de transmission sont calculées par apprentissage.

Selon un autre aspect de l'invention, ledit apprentissage est réalisé à l'initialisation de la pluralité de canaux de transmission. Un avantage de ce mode de réalisation est sa simplicité.

Préférentiellement, ledit apprentissage est répété en cours de fonctionnement du canal de transmission. Un avantage est que le procédé selon cet aspect de l'invention ajuste régulièrement les valeurs des paramètres utilisés.

Selon un aspect de l'invention, l'étape de correction adaptative corrige le signal optique composite dans le domaine optique. Un avantage d'une solution optique est de permettre une meilleure performance pour une moindre consommation électrique.

Selon un autre aspect de l'invention, le procédé de traitement comprend, préalablement à l'étape de correction adaptative, une étape de conversion du signal optique composite en un signal électrique composite et en ce que l'étape de correction adaptative corrige le signal électrique composite dans le domaine électrique.

L'avantage d'une solution électrique est son faible coût, sa simplicité d'implémentation et sa rapidité de traitement.

Le traitement électrique peut être réalisé ou bien à l'émission du signal ou bien à la réception, ou encore aux deux à la fois:
- lorsque le traitement est réalisé à l'émission, il s'agit de pré-compensation et postérieurement à l'étape de correction adaptative, il y a une étape de conversion du signal composite corrigé en un signal optique composite
- lorsque le traitement est réalisé à la réception, il s'agit de post-compensation et préalablement à l'étape de correction adaptative, il y a une étape de conversion du signal optique composite en un signal électrique composite

L'invention concerne également un dispositif de traitement d'un signal optique composite formé d'une séquence de secteurs temporels obtenus par multiplexage temporel d'une pluralité de signaux optiques transmis sur une pluralité de canaux de transmission d'un réseau d'accès optique partagé.

Le dispositif est particulier en ce qu'il comprend les moyens suivants :
- prise en compte d'un calendrier d'émission de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel; et
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

L'invention concerne également un équipement central d'un réseau d'accès optique partagé entre une pluralité d'équipements d'extrémité, apte à transmettre un signal composite formé d'une séquence de secteurs temporels obtenus par multiplexage temporel d'une pluralité de signaux optiques à destination de ladite pluralité d'équipements d'extrémité.

Un tel équipement central est particulier en ce qu'il comprend un premier dispositif de traitement du premier signal optique composite selon l'invention.

Selon un autre aspect de l'invention, ledit équipement central est apte à recevoir un second signal composite formé d'une séquence de secteurs temporels obtenus par multiplexage temporel d'une seconde pluralité de signaux optiques en provenance de ladite pluralité d'équipements d'extrémité et il comprend un second dispositif de traitement du second signal composite selon l'invention.

L'invention concerne également un réseau d'accès optique partagé par une pluralité d'équipements d'extrémité reliés à un équipement central par une pluralité de canaux de transmission, ledit équipement central étant apte à transmettre un premier signal optique composite formé d'une séquence de secteurs temporels obtenus par multiplexage temporel d'une première pluralité de signaux optiques à destination de ladite pluralité d'équipements d'extrémité. Un tel réseau d'accès est particulier en ce que ledit équipement central comprend un premier dispositif de correction dudit premier signal composite selon l'invention.

Un tel réseau d'accès permet de traiter de façon adaptative les signaux optiques émis dans le sens descendant.

Selon un aspect de l'invention, ledit équipement central est apte à recevoir un second signal composite formé d'une séquence de secteurs temporels obtenus par multiplexage temporel d'une seconde pluralité de signaux optiques en provenance de ladite pluralité d'équipements d'extrémité. Ledit équipement central est particulier en ce qu'il comprend un second dispositif de correction dudit second signal composite selon l'invention.

Un tel réseau d'accès permet en outre de traiter de façon adaptative les signaux optiques émis dans le sens remontant.

L'invention concerne enfin un produit programme d'ordinateur téléchargeable depuis un réseau de communication et/ou stocké sur un support lisible par ordinateur et/ou exécutable par un microprocesseur. Un tel produit programme d'ordinateur est **caractérisé en ce qu**'il comprend des instructions de code de programme pour l'exécution du procédé de traitement d'une pluralité de signaux optiques transmis sur un réseau d'accès optique partagé selon l'invention, lorsqu'il est exécuté sur un ordinateur.

### 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de réseau d'accès optique passif de type PON reliant un équipement central à une pluralité d'équipements d'extrémité dans le sens descendant selon l'art antérieur;
- la figure 2 présente un exemple de réseau d'accès optique passif de type PON reliant un équipement central à une pluralité d'équipements d'extrémité dans le sens remontant selon l'art antérieur;
- la figure 3 présente un exemple de réseau d'accès optique passif de type PON reliant un équipement central à une pluralité d'équipements d'extrémité dans le sens descendant selon l'invention;
- la figure 4 présente un exemple de réseau d'accès optique passif de type PON reliant un équipement central à une pluralité d'équipements d'extrémité dans le sens remontant selon l'invention;
- la figure 5 présente un exemple de dispositif de traitement d'un signal optique composite dans le domaine électrique selon l'invention; et
- la figure 6 présente un exemple de dispositif de traitement d'un signal optique composite dans le domaine optique selon l'invention.

### 6. Description d'un mode de réalisation particulier de l'invention

Le principe général de l'invention repose sur la mise en oeuvre d'un procédé de traitement d'un signal optique composite formé d'une séquence de secteurs temporels obtenus par multiplexage temporel d'une pluralité de signaux optiques transmis sur une pluralité de canaux de transmission d'un réseau d'accès optique partagé prenant en compte un calendrier d'émission des signaux optiques dans le réseau d'accès optique afin de réaliser une correction adaptée à chaque secteur temporel du signal optique composite.

Lors de la transmission d'un signal optique sur un réseau d'accès optique, des pénalités sont inévitablement introduites. Ces pénalités sont dues à des perturbations physiques du type dispersion modale, de polarisation ou chromatique ou des effets non linéaires. Ces pénalités sont fonction de la distance de propagation, du débit, de la puissance injectée et de contraintes environnementales exercées sur la fibre optique. Lorsqu'on augmente la portée d'un réseau d'accès optique au-delà de 20 km, les pénalités augmentent. Une correction du signal optique composite est alors nécessaire pour diminuer ces pénalités et pour garantir une bonne qualité du signal optique reçu par le récepteur.

Dans ce qui suit, on considèrera un réseau d'accès optique partagé reliant un équipement central à une pluralité de N équipements terminaux, N entier supérieur à 1. Des exemples de réalisation vont maintenant être décrits en relation avec les dessins annexés. Pour des raisons de simplicité, on considèrera N=3 équipements d'extrémité. Toutefois, l'invention n'est pas limitée à ce nombre restreint d'équipements d'extrémité et elle concerne toute architecture de réseau d'accès optique comportant une pluralité d'équipements d'extrémité.

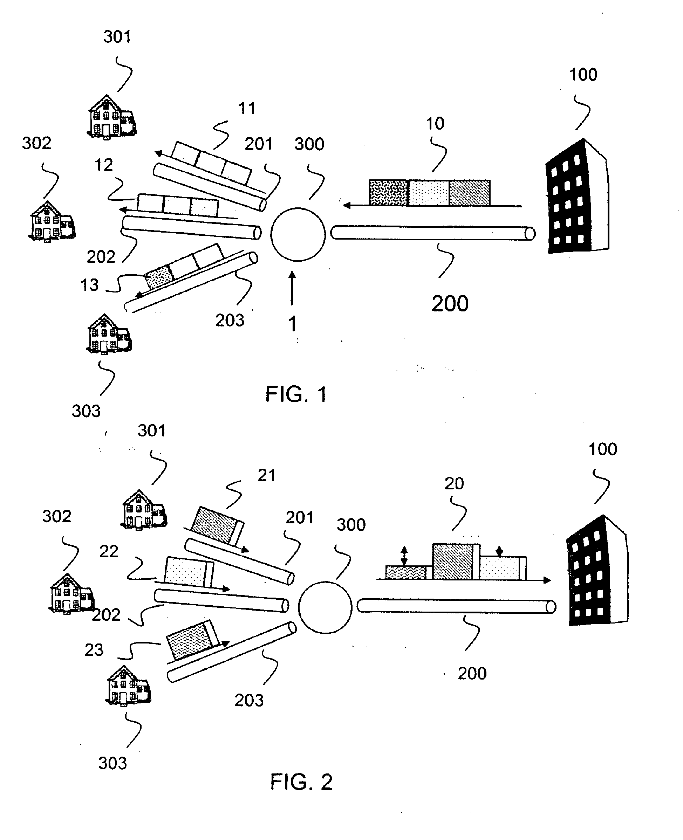

En relation avec la Fig. 1, on présente un réseau d'accès optique partagé dans lequel est transmis un signal optique 10 dans le sens descendant selon l'art antérieur. Un tel réseau d'accès 1 comprend un équipement central 100 (en anglais, 'Optical Line Terminal" ou OLT) relié à un coupleur 300 1 vers 3 par un canal de transmission 200. Le coupleur 300 est un équipement passif, qui est lui-même relié à trois équipements d'extrémité 301 à 303 respectivement par des canaux de transmission 201 à 203. On désigne également de tels équipements d'extrémité par le module optique (en anglais, "Optical Network Unit" ou ONU) qu'ils contiennent.

Dans le sens descendant, le coupleur 300 reçoit le signal optique composite 10 issu de l'équipement central, dont la trame est composée de N secteurs temporels contigus de données 11 à 13 selon la technologie de multiplexage temporel TDM pour les N équipements d'extrémité 301 à 303 et de secteurs de gestion communs à tous les utilisateurs transportant des informations de configuration et de gestion de trame. Le débit utile offert aux utilisateurs correspond donc à une partie du débit en ligne. Classiquement, les données sont transmises en bande de base avec un codage de type NRZ (Non Return to Zero).

En relation avec la Fig. 2, on présente le même réseau d'accès optique partagé 1 dans lequel est transmis un signal optique 20 dans le sens remontant selon l'art antérieur. Le signal optique 20 est un signal composite obtenu selon la technologie de multiplexage temporel dont la trame est composée de N secteurs temporels 21 à 23 envoyés par les N équipements d'extrémité 301 à 303. Afin d'éviter que ces secteurs temporels ne se chevauchent, une synchronisation et un contrôle des temps d'émission des modules optiques des équipements d'extrémité 301 à 303 est mise en oeuvre par l'équipement central. Notamment, la synchronisation des horloges des différents utilisateurs est verrouillée grâce à la trame descendante issue de l'équipement central 100. En effet, une horloge de référence est fournie par l'équipement central. Les équipements d'extrémité se calent sur cette horloge qu'ils récupèrent à partir des temps bits du flux descendant pour générer le temps d'horloge de leur flux montant.

Toutefois, cette synchronisation ne permet pas d'éviter une incertitude sur la position temporelle des secteurs. Cette incertitude impose un temps de garde minimal entre deux secteurs consécutifs. Il est donc nécessaire de réaliser, pour chaque secteur temporel du signal optique composite, un recalage de phase des données des secteurs temporels par l'équipement du central en comparant le temps de phase des flux montants à une horloge de référence.

L'équipement central 100 comprend également un module de photo détection apte à convertir le signal optique composite reçu 20 en un signal électrique. Un tel module doit s'adapter notamment en termes de gain électrique, aux variations de budget optique et de puissance d'émission optique de chacun des équipements d'extrémité 301 à 303.

Les processus nécessaires à la bonne détection du signal optique composite reçu au niveau de l'équipement central du sens remontant sont les suivants: le temps d'activation/désactivation (Ton/Toff) du laser de l'équipement d'extrémité, I, la récupération du niveau de puissance optique, la récupération du rythme d'horloge et le début de délimitation de la rafale. La subdivision exacte du temps de la couche physique pour toutes ces fonctions est déterminée en partie par des équations de contrainte, et en partie par des choix d'implémentation.

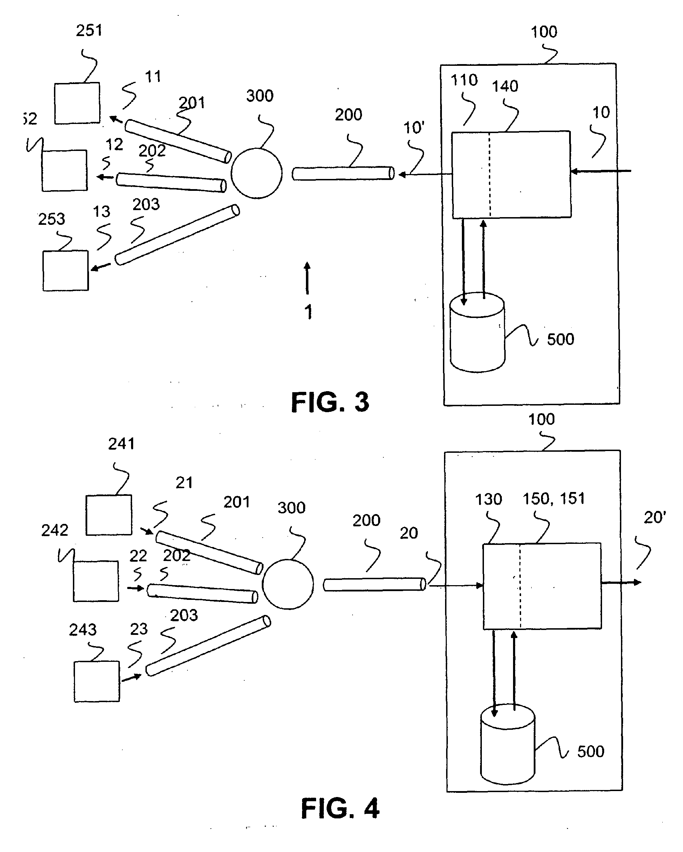

On présente maintenant en relation avec la Fig. 3 un exemple de mise en oeuvre d'un réseau d'accès optique partagé selon un mode de réalisation de l'invention. Dans cet exemple, on considère la transmission de signaux optiques dans le sens descendant, c'est-à-dire de l'équipement central 100 vers la pluralité d'équipements d'extrémité 301 à 303. L'équipement central 100 comprend un émetteur/récepteur 110 apte à émettre un signal optique composite formé d'une séquence de secteurs temporels obtenus par multiplexage temporel d'une pluralité de signaux optiques à destination de récepteurs 251 à 253 appartenant respectivement à la pluralité d'équipements d'extrémité 301 à 303 (pour des raisons de clarté, seuls les récepteurs des équipements d'extrémité sont représentés). L'émetteur/récepteur 110 selon l'invention comprend un dispositif de traitement 140 du signal optique composite 10 apte à traiter le signal optique composite 10 avant de transmettre un signal optique composite traité 10' aux récepteurs des équipements d'extrémité 251 à 253 dans le sens descendant.

Le dispositif de traitement 140 comprend des moyens de correction adaptative du signal optique composite 10 aptes à adapter des paramètres de traitement à chaque secteur temporel dudit signal en fonction d'un calendrier d'émission de ladite pluralité de signaux optiques dans ledit réseau d'accès.

On entend par calendrier d'émission une table associant à un secteur temporel le signal optique composite auquel il appartient et le canal de transmission qu'il a emprunté ou qu'il va emprunter. Le terme "canal de transmission" est utilisé ici pour désigner de façon générique le chemin formé d'un canal ou d'une succession de canaux de transmission que le secteur temporel emprunte de sa source jusqu'à sa destination.

Dans cet exemple, le chemin à associer à un secteur temporel du signal optique 11 est composé du canal de transmission 200 et du canal de transmission 201. Le calendrier d'émission est par exemple stocké dans une base de données 500 du réseau d'accès optique partagé 1.
Le dispositif de traitement 140 réalise un prétraitement du signal optique composite 10 à partir de connaissances a priori dont il dispose des canaux de transmission 200 et 201. On comprend que ce prétraitement est adaptatif en ce qu'il varie selon le secteur temporel considéré en fonction de caractéristiques de performances du canal de transmission 201 telles que sa distance, par exemple, ou encore sa perte optique, son niveau de dispersion chromatique. De façon générale, le dispositif 140 mettant en oeuvre le prétraitement selon l'invention est susceptible de prendre en compte tout effet engendrant une pénalité de transmission.

Selon l'invention, le dispositif de traitement 140 est préférentiellement placé dans l'équipement central. Un avantage est qu'un seul dispositif 140 est utilisé pour prétraiter le signal optique composite émis à destination de la pluralité d'équipements d'extrémité, ce qui permet d'optimiser les ressources et de limiter les coûts d'exploitation du réseau d'accès optique partagé.

En relation avec la Fig. 4, on présente un exemple de mise en oeuvre d'un réseau d'accès optique partagé selon un autre mode de réalisation de l'invention. Dans cet exemple, on considère la transmission de signaux optiques dans le sens remontant, c'est-à-dire de la pluralité d'équipements d'extrémité 301 à 303 vers l'équipement central 100. L'équipement central 100 comprend un émetteur/récepteur 130 apte à recevoir un signal optique composite 20 formé d'une séquence de secteurs temporels obtenus par multiplexage temporel d'une pluralité de signaux optiques en provenance d'émetteurs 241 à 243 appartenant respectivement à la pluralité d'équipements d'extrémité 301 à 303 (non représentés sur cette figure). L'émetteur/récepteur 130 selon l'invention comprend un dispositif de traitement 150, 151 du signal optique composite 20 afin d'obtenir un signal optique composite traité 20'.

Le dispositif de traitement 150, 151 comprend des moyens de correction adaptative du signal optique composite 20 reçu aptes à adapter des paramètres de traitement à chaque secteur temporel dudit signal en fonction d'un calendrier d'émission de ladite pluralité de signaux optiques dans ledit réseau d'accès.
Le dispositif de traitement 150, 160 réalise un post-traitement du signal optique composite 20 à partir de connaissances a priori dont il dispose des canaux de transmission 200 et 201 à 203. On comprend que ce post-traitement est adaptatif en ce qu'il varie selon le secteur temporel considéré en fonction de caractéristiques du canal de transmission 201 à 203 emprunté. De même que pour le dispositif 140 selon l'invention, le dispositif 150, 151 selon l'invention est susceptible de prendre en compte tout effet engendrant une pénalité de transmission.

Selon l'invention, le dispositif de traitement 150, 151 est préférentiellement placé dans l'équipement central. Un avantage est qu'un seul dispositif de post-traitement 130 est utilisé pour traiter le signal optique composite reçu en provenance de la pluralité d'équipements d'extrémité. Ceci permet d'optimiser les ressources et de limiter les coûts d'exploitation du réseau d'accès optique.

On notera toutefois que, selon un autre aspect de l'invention, le réseau d'accès peut comprendre, pour le traitement des signaux dans le sens descendant, une pluralité des dispositifs de post-traitement, placés dans chacun des équipements d'extrémité 301 à 303. De tels dispositifs permettent d'ajuster le prétraitement adaptatif réalisé au niveau de l'équipement central 100.

De même, dans le sens remontant, le réseau d'accès optique partagé 1 selon l'invention peut comprendre une pluralité de dispositifs de prétraitement, placés dans chacun des émetteurs 241 à 243 des équipements d'extrémité 301 à 303, afin d'améliorer la qualité du signal optique composite 10 reçu par le dispositif de post-traitement 130 au niveau de l'équipement central 100.

Selon l'invention, les paramètres de traitement sont calculés à partir d'un ensemble de paramètres représentatifs de performances du canal de transmission associé au secteur temporel considéré.

Selon un aspect de l'invention, un ensemble de valeurs moyennes de paramètres de traitement est calculé pour la pluralité de signaux optiques à traiter.

Selon un autre aspect de l'invention, des valeurs spécifiques de paramètres de traitement sont calculées pour chacun des signaux optiques de la pluralité de signaux optiques 11 à 13, 21 à 23 considérée.

Selon un autre aspect de l'invention, les valeurs des paramètres représentatifs de performances de ladite pluralité de canaux de transmission sont calculées par apprentissage. Un tel apprentissage est généralement réalisé à l'initialisation de la transmission sur le réseau d'accès. Préférentiellement, il est renouvelé régulièrement pour éviter toute dérive du dispositif de traitement adaptatif.

Selon l'invention, le procédé de traitement mis en oeuvre par le dispositif de traitement 140, 150, 151 peut être réalisé dans le domaine optique ou bien dans le domaine électrique.

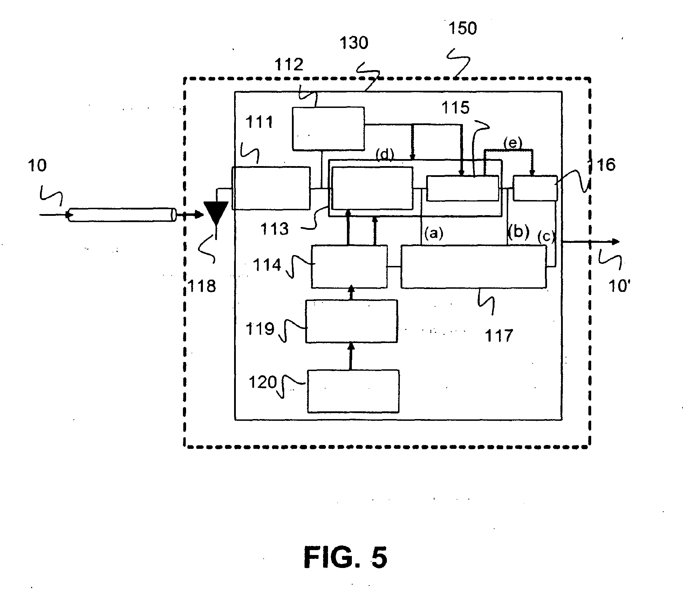

En relation avec la Fig. 5, on présente maintenant un exemple de réalisation d'un récepteur 150 placé dans l'équipement central et comprenant un dispositif de traitement selon l'invention apte à fonctionner dans le domaine électrique.

Le récepteur 130 comprend un dispositif de traitement 150 apte à traiter les signaux optiques composites formés à partir d'une pluralité de signaux optiques 11 à 13 et reçus par l'équipement central 100 et en provenance de la pluralité d'équipements d'extrémité 301 à 303 selon le sens remontant.

Un tel récepteur 130 comprend une photodiode 118 apte à convertir le signal optique composite en un signal électrique. Le signal électrique obtenu est ensuite traité par le dispositif de traitement 150, qui comprend un module de filtrage passe-bas 111 apte à filtrer le signal électrique. Le signal électrique filtré est ensuite resynchronisé à l'aide de moyens de récupération d'un signal d'horloge 112. Le signal électrique resynchronisé est traité par un module de traitement électronique du signal 113 apte à remettre en forme le signal électrique resynchronisé afin de faciliter une prise de décision. Le signal électrique ainsi traité est présenté en entrée d'un module de décision 115 apte à décider un zéro ou un un à partir du signal électrique d'entrée. Le signal décidé peut ensuite être présenté à un module de correction 116 mettant en oeuvre des codes correcteurs d'erreurs (en anglais, "Forward Error Coding" ou FEC). Le traitement électronique 113 s'appuie sur des paramètres de traitement adaptatifs qui sont définis à partir d'un ensemble de paramètres représentatifs de performances du ou des canaux de transmission empruntés par le signal à traiter. De tels paramètres sont par exemple la réponse impulsionnelle du canal, des estimations des taux d'erreurs par séquence, des estimations de l'ouverture de l'oeil.

On considère un secteur temporel issu d'un i^{ème} signal optique parmi la pluralité de N, N>0, signaux optiques en provenance des équipements d'extrémité, i entier supérieur à zéro et inférieur à N, formant le signal optique composite reçu par l'équipement central. Selon l'invention, les paramètres de traitement à appliquer par le module de traitement électronique 113 à un secteur temporel du signal optique composite 10 sont déterminés à l'aide d'un calendrier d'émission 120. Un tel calendrier peut se présenter sous la forme d'une table associant à un secteur temporel l'ensemble de paramètres représentatifs de performances du ou des canaux de transmission empruntés par le signal dont il est issu. Un module 119 de détermination des paramètres de traitement calcule les paramètres de traitement adaptés au secteur temporel considéré à partir de cet ensemble de paramètres de transmission fourni par le calendrier 120.

De façon avantageuse, le dispositif de traitement 150 peut également comprendre une boucle de contre-réaction comprenant un module de mesure 117 et un module de suivi 114. Le module de mesure 117 est apte à mesurer un indicateur de performance du signal traité obtenu, soit en sortie (a) du module de traitement électronique 113, soit en sortie (b) du module de prise de décision 115, soit encore en sortie (c) du module de correction par codes correcteurs d'erreurs 116. L'indicateur de performance est transmis au module de suivi 114 qui modifie les paramètres de traitement utilisés par le module de traitement électronique 113. Le traitement électronique est de nouveau appliqué au signal électrique resynchronisé avec les nouvelles valeurs de paramètres de traitement. La boucle de contre-réaction est répétée jusqu'à convergence du signal décidé corrigé vers la meilleure valeur. Les valeurs de paramètres de traitement finalement obtenues seront appliquées au prochain secteur temporel appartenant au i^{ème} signal optique.

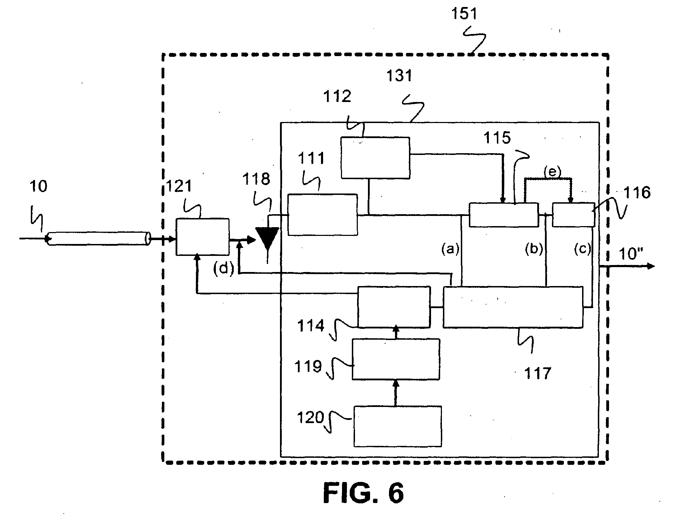

En relation avec la Fig. 6, on présente maintenant un exemple de réalisation d'un récepteur 131 placé dans l'équipement central 100 et comprenant un dispositif de traitement 151 selon l'invention apte à fonctionner en partie dans le domaine optique et en partie dans le domaine électrique.

Le dispositif de traitement 151 est apte à traiter un signal optique composite 10 reçu par l'équipement central 100 et en provenance de la pluralité d'émetteurs 241 à 243 selon le sens remontant. Il fournit un signal optique composite traité 10". Pour ce faire, ledit dispositif de traitement comprend un module de traitement optique 121 apte à remettre en forme le signal optique composite reçu par l'équipement central 100 et un module de traitement électrique 131. Un tel module peut être réalisé, par exemple à l'aide d'un filtre à treillis optique ou d'un compensateur de dispersion chromatique accordable. Le signal optique remis en forme est ensuite converti par la photodiode 118 en un signal électrique. Le signal électrique obtenu est ensuite traité par le module de traitement électrique 131, qui comprend un module de filtrage passe-bas 111 apte à filtrer le signal électrique, des moyens de récupération d'un signal d'horloge 112 aptes à resynchroniser le signal électrique filtré et un module de décision 115 apte à décider un zéro ou un un à partir du signal électrique filtré resynchronisé. Le signal décidé peut ensuite être présenté à un module de correction 116 mettant en oeuvre des codes correcteurs d'erreurs (en anglais, "Forward Error Coding" ou FEC).

Le module de traitement optique 121 s'appuie sur des paramètres de traitement adaptatifs qui sont définis à partir d'un ensemble de paramètres représentatifs de performances du canal de transmission. Un tel ensemble comprend, par exemple, la réponse impulsionnelle du canal, des estimations des taux d'erreurs par séquence ou encore des estimations de l'ouverture de l'oeil. Le traitement adaptatif qui va être appliqué au secteur temporel du signal optique composite reçu a notamment pour but d'inverser la réponse impulsionnelle du canal de transmission.

Le calendrier d'émission 120 permet, en associant à un secteur temporel, un signal optique et un canal de transmission, d'accéder à l'ensemble de paramètres de transmission correspondant au secteur temporel à traiter.

Le module 119 de détermination des paramètres de traitement calcule ensuite les paramètres de traitement adaptés au secteur temporel considéré à partir de cet ensemble de paramètres de transmission fourni par le calendrier 120. De façon avantageuse, le dispositif de traitement peut également comprendre une boucle de contre-réaction comprenant un module de mesure 117 et un module de suivi 114. Le module de mesure 117 est apte à mesurer un indicateur de performance du signal traité obtenu, soit en sortie (a) du module de filtrage 111, soit en sortie (b) du module de prise de décision 115, soit encore en sortie (c) du module de correction par codes correcteurs d'erreurs 116. L'indicateur de performance est transmis au module de suivi 114 qui modifie les paramètres de traitement utilisés par le module de traitement électronique 113 et les transmet au module de traitement optique 121. Le traitement optique est de nouveau appliqué au secteur temporel considéré du signal optique reçu avec les nouvelles valeurs de paramètres de traitement. La boucle de contre-réaction est répétée jusqu'à convergence du signal décidé corrigé vers la meilleure valeur.

Cet exemple de réalisation par un dispositif de traitement 151 mi optique, mi électrique peut également s'appliquer dans le sens descendant. Dans ce cas, le signal optique composite est avantageusement prétraité au niveau de l'émetteur situé dans l'équipement central 100. Le dispositif de prétraitement a, de la même manière, pour objet d'inverser à l'avance le canal de transmission qui va transporter le signal optique composite.

La boucle de contre-réaction permet, de la même façon que dans le cas d'un traitement électrique, de calculer les meilleures valeurs de paramètres à appliquer au prochain secteur temporel issu du même signal optique que le secteur temporel courant. Toutefois, la boucle de contre-réaction se distingue de celle utilisée dans le sens remontant. En effet, elle se base sur une mesure de la qualité des signaux optiques reçus par les équipements d'extrémité. Une telle mesure doit donc être remontée au niveau de l'équipement central, par exemple dans les entêtes de paquets TDM.

Les exemples des figures 5 et 6 concernent le sens remontant. Toutefois, un dispositif de traitement adaptatif selon l'invention peut être mis en oeuvre dans le sens descendant à partir d'une architecture similaire, aux différences de réglage près. A cet égard, il faut noter que dans le sens descendant, le traitement adaptatif selon l'invention se fait préférentiellement dans le domaine optique pour des raisons d'efficacité. En effet, la conversion par la diode photo électrique 118 est une opération irréversible. Par conséquent, une conversion électro optique entraînerait une dégradation du signal optique composite traité.

Selon une implémentation particulière de l'invention, les étapes du procédé de traitement d'un signal optique composite selon l'invention sont déterminées par les instructions d'un programme d'ordinateur incorporé dans un dispositif de traitement de données tel que le dispositif 150, 151. Le programme comporte des instructions de programme qui, lorsque ledit programme est chargé et exécuté dans le dispositif dont le fonctionnement est alors commandé par l'exécution du programme, réalisent les étapes du procédé selon l'invention.

En conséquence, l'invention s'applique également à un programme d'ordinateur, notamment un programme d'ordinateur sur ou dans un support d'enregistrement d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

## Revendications

1. Procédé de traitement d'un signal optique composite formé d'une séquence de secteurs temporels obtenus par multiplexage temporel d'une pluralité de signaux optiques (11 à 13) transmis sur une pluralité de canaux de transmission (201 à 203) d'un réseau d'accès optique partagé (1), ledit procédé étant **caractérisé en ce qu'**il comprend les étapes suivantes :
- prise en compte d'un calendrier d'émission de ladite pluralité de signaux optiques dans ledit réseau d'accès, ledit calendrier associant à un secteur temporel, un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel;
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

2. Procédé de traitement selon la revendication 1, **caractérisé en ce que** ladite étape de correction adaptative utilise un ensemble de valeurs moyennes de paramètres de traitement calculé pour la pluralité de signaux optiques.

3. Procédé de traitement selon la revendication 1, **caractérisé en ce que** l'ensemble de valeurs de paramètres de traitement calculé est spécifique à un signal optique.

4. Procédé de traitement selon l'une quelconque des revendications 1 à 3, **caractérisé en ce que** les valeurs desdits paramètres représentatifs de performances de ladite pluralité de canaux de transmission sont calculées par apprentissage.

5. Procédé de traitement selon la revendication 4, **caractérisé en ce que** ledit apprentissage est réalisé à l'initialisation de la pluralité de canaux de transmission.

6. Procédé de traitement selon l'une des revendications 4 et 5, **caractérisé en ce que** ledit apprentissage est répété en cours de fonctionnement du canal de transmission.

7. Procédé de traitement selon la revendication 1, **caractérisé en ce que** l'étape de correction adaptative corrige le signal optique composite dans le domaine optique.

8. Procédé de traitement selon la revendication 1, **caractérisé en ce qu'**il comprend, préalablement à l'étape de correction adaptative, une étape de conversion du signal optique composite en un signal électrique composite et **en ce que** l'étape de correction adaptative corrige le signal électrique composite dans le domaine électrique.

9. Dispositif de traitement (140, 151, 161) d'un signal optique composite (10, 20) formé d'une séquence de secteurs temporels obtenus par multiplexage temporel d'une pluralité de signaux optiques (11 à 13, 21 à 23) transmis sur une pluralité de canaux de transmission (200 à 203) d'un réseau d'accès optique partagé (1), ledit procédé étant **caractérisé en ce qu'**il comprend les moyens suivants :
- prise en compte d'un calendrier d'émission de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel;
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

10. Equipement central (100) d'un réseau d'accès optique partagé (1) entre une pluralité d'équipements d'extrémité (301 à 303), apte à transmettre un premier signal optique composite (10) formé d'une séquence de secteurs temporels obtenus par multiplexage temporel d'une première pluralité de signaux optiques à destination de ladite pluralité d'équipements d'extrémité, **caractérisé en ce qu'**il comprend un premier dispositif de traitement (140) du premier signal optique composite (10) comprenant des moyens de:
- prise en compte d'un calendrier d'émission (120) de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel;
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

11. Equipement central (100) d'un réseau d'accès optique partagé (1) selon la revendication 10, apte à recevoir un second signal composite (20) formé d'une séquence de secteurs temporels obtenus par multiplexage temporel d'une seconde pluralité de signaux optiques (21 à 23) en provenance de ladite pluralité d'équipements d'extrémité, **caractérisé en ce qu'**il comprend un second dispositif de traitement (150, 151) du second signal composite (20) comprenant des moyens de :
- prise en compte d'un calendrier d'émission (120) de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel;
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

12. Réseau d'accès optique partagé (1) par une pluralité d'équipements d'extrémité (251 à 253) reliés à un équipement central (100) par une pluralité de canaux de transmission (200 à 203), ledit équipement central (100) étant apte à transmettre un premier signal composite (10) formé d'une séquence de secteurs temporels obtenus par multiplexage temporel d'une première pluralité de signaux optiques (11 à 13) à destination de ladite pluralité d'équipements d'extrémité (301 à 303), **caractérisé en ce que** ledit équipement central comprend un premier dispositif de correction (140) dudit premier signal composite (10) comprenant des moyens de :
- prise en compte d'un calendrier d'émission (120) de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel;
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

13. Réseau d'accès optique partagé (1) selon la revendication 12, dans lequel ledit équipement central (100) est apte à recevoir un second signal optique composite (20) formé d'une séquence de secteurs temporels obtenus par multiplexage temporel d'une seconde pluralité de signaux optiques (21 à 23) en provenance de ladite pluralité d'équipements d'extrémité (301 à 303), ledit équipement central étant **caractérisé en ce qu'**il comprend un second dispositif de correction (150, 151) dudit second signal composite comprenant des moyens de :
- prise en compte d'un calendrier d'émission (120) de ladite pluralité de signaux optiques dans ledit réseau d'accès, ledit calendrier associant à un secteur temporel un signal optique de la séquence et un canal de transmission de ladite pluralité de canaux de transmission emprunté par ledit signal optique;
- récupération d'un ensemble de paramètres représentatifs de performances dudit canal de transmission associé audit secteur temporel;
- calcul d'un ensemble de valeurs de paramètres de correction à partir dudit ensemble de paramètres représentatifs des performances dudit canal; et
- correction adaptative du secteur temporel à l'aide de l'ensemble de paramètres de correction.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de traitement d'une pluralité de signaux optiques selon la revendication 1, lorsqu'il est exécuté sur un ordinateur.

## Claims

1. Method of processing a composite optical signal formed by a sequence of time sectors obtained by time-division multiplexing a plurality of optical signals (11 to 13) transmitted over a plurality of transmission channels (201 to 203) of a shared optical access network (1), said method being **characterized in that** it comprises the following steps:
- recognition of a schedule for sending said plurality of optical signals in said access network, said schedule associating with a time sector an optical signal of the sequence and a transmission channel of said plurality of transmission channels used by said optical signal;
- recovery of a set of parameters representative of performance of said transmission channel associated with said time sector;
- calculation of a set of correction parameter values from said set of parameters representative of the performance of said channel; and
- adaptive correction of the time sector using the set of correction parameters.

2. Processing method according to Claim 1,
**characterized in that** said adaptive correction step uses a set of average values of processing parameters calculated for the plurality of optical signals.

3. Processing method according to Claim 1,
**characterized in that** the calculated set of processing parameter values is specific to an optical signal.

4. Processing method according to any one of Claims 1 to 3, **characterized in that** the values of said parameters representative of performance of said plurality of transmission channels are calculated by learning.

5. Processing method according to Claim 4,
**characterized in that** said learning is carried out when the plurality of transmission channels is initialized.

6. Processing method according to one of Claims 4 and 5, **characterized in that** said learning is repeated while the transmission channel is operating.

7. Processing method according to Claim 1,
**characterized in that** the adaptive correction step corrects the composite optical signal in the optical domain.

8. Processing method according to Claim 1,
**characterized in that** it comprises, prior to the adaptive correction step, a step for converting the composite optical signal into a composite electrical signal and **in that** the adaptive correction step corrects the composite electrical signal in the electrical domain.

9. Device (140, 151, 161) for processing a composite optical signal (10, 20) formed by a sequence of time sectors obtained by time-division multiplexing a plurality of optical signals (11 to 13, 21 to 23) transmitted over a plurality of transmission channels (200 to 203) of a shared optical access network (1), said device being **characterized in that** it comprises the following means:
- recognition of a schedule for sending said plurality of optical signals in said access network, said schedule associating with a time sector an optical signal of the sequence and a transmission channel of said plurality of transmission channels used by said optical signal;
- recovery of a set of parameters representative of performance of said transmission channel associated with said time sector;
- calculation of a set of correction parameter values from said set of parameters representative of the performance of said channel; and
- adaptive correction of the time sector using the set of correction parameters.

10. Central equipment (100) of a shared optical access network (1) between a plurality of terminal elements (301 to 303), able to transmit a first composite optical signal (10) formed by a sequence of time sectors obtained by time-division multiplexing a first plurality of optical signals intended for said plurality of terminal elements, **characterized in that** it comprises a first device (140) for processing the first composite optical signal (10) comprising means of:
- recognizing a schedule (120) for sending said plurality of optical signals in said access network, said schedule associating with a time sector an optical signal of the sequence and a transmission channel of said plurality of transmission channels used by said optical signal;
- recovering a set of parameters representative of performance of said transmission channel associated with said time sector;
- calculating a set of correction parameter values from said set of parameters representative of the performance of said channel; and
- adaptively correcting the time sector using the set of correction parameters.

11. Central equipment (100) of a shared optical access network (1) according to Claim 10, able to receive a second composite signal (20) formed by a sequence of time sectors obtained by time-division multiplexing a second plurality of optical signals (21 to 23) from said plurality of terminal elements, **characterized in that** it comprises a second device (150, 151) for processing the second composite signal (20) comprising means of:
- recognizing a schedule (120) for sending said plurality of optical signals in said access network, said schedule associating with a time sector an optical signal of the sequence and a transmission channel of said plurality of transmission channels used by said optical signal;
- recovering a set of parameters representative of performance of said transmission channel associated with said time sector;
- calculating a set of correction parameter values from said set of parameters representative of the performance of said channel; and
- adaptively correcting the time sector using the set of correction parameters.

12. Optical access network (1) shared by a plurality of terminal elements (251 to 253) linked to central equipment (100) by a plurality of transmission channels (200 to 203), said central equipment (100) being able to transmit a first composite signal (10) formed by a sequence of time sectors obtained by time-division multiplexing a first plurality of optical signals (11 to 13) intended for said plurality of terminal elements (301 to 303), **characterized in that** said central equipment comprises a first device (140) for correcting said first composite signal (10) comprising means of
- recognizing a schedule (120) for sending said plurality of optical signals in said access network, said schedule associating with a time sector an optical signal of the sequence and a transmission channel of said plurality of transmission channels used by said optical signal;
- recovering a set of parameters representative of performance of said transmission channel associated with said time sector;
- calculating a set of correction parameter values from said set of parameters representative of the performance of said channel; and
- adaptively correcting the time sector using the set of correction parameters.

13. Shared optical access network (1) according to Claim 12, wherein said central equipment (100) is able to receive a second composite optical signal (20) formed by a sequence of time sectors obtained by time-division multiplexing a second plurality of optical signals (21 to 23) from said plurality of terminal elements (301 to 303), said central equipment being **characterized in that** it comprises a second device (150, 151) for correcting said second composite signal comprising means of:
- recognizing a schedule (120) for sending said plurality of optical signals in said access network, said schedule associating with a time sector an optical signal of the sequence and a transmission channel of said plurality of transmission channels used by said optical signal;
- recovering a set of parameters representative of performance of said transmission channel associated with said time sector;
- calculating a set of correction parameter values from said set of parameters representative of the performance of said channel; and
- adaptively correcting the time sector using the set of correction parameters.

14. Computer program product that can be downloaded from a communication network and/or stored on a medium that can be read by computer and/or executed by a microprocessor, **characterized in that** it comprises programme code instructions for executing the method of processing a plurality of optical signals according to Claim 1, when it is executed on a computer.

## Patentansprüche

1. Verfahren zur Verarbeitung eines zusammengesetzten optischen Signals, das aus einer Folge von Zeitsektoren geformt wird, die durch Zeitmultiplex einer Vielzahl von optischen Signalen (11 bis 13) erhalten wird, welche auf einer Vielzahl von Übertragungskanälen (201 bis 203) eines gemeinsam genutzten optischen Zugangsnetzes (1) übertragen werden, wobei das Verfahren **dadurch gekennzeichnet ist, dass** es die folgenden Schritte enthält:
- Berücksichtigung eines Sendezeitplans der Vielzahl von optischen Signalen im Zugangsnetz, wobei der Zeitplan einem Zeitsektor ein optisches Signal der Folge und einen Übertragungskanal der Vielzahl von Übertragungskanälen zuordnet, über den das optische Signal geht;
- Abrufen einer Gruppe von Parametern, die für Leistungen des dem Zeitsektor zugeordneten Übertragungskanals repräsentativ sind;
- Berechnung einer Gruppe von Korrekturparameterwerten ausgehend von der Gruppe von für die Leistungen des Kanals repräsentativen Parametern; und
- adaptive Korrektur des Zeitsektors mit Hilfe der Gruppe von Korrekturparametern.

2. Verarbeitungsverfahren nach Anspruch 1, **dadurch gekennzeichnet, dass** der Schritt der adaptiven Korrektur eine Gruppe von Mittelwerten von Verarbeitungsparametern verwendet, die für die Vielzahl von optischen Signalen berechnet wird.

3. Verarbeitungsverfahren nach Anspruch 1, **dadurch gekennzeichnet, dass** die berechnete Gruppe von Verarbeitungsparameterwerten für ein optisches Signal spezifisch ist.

4. Verarbeitungsverfahren nach einem der Ansprüche 1 bis 3, **dadurch gekennzeichnet, dass** die Werte der für Leistungen der Vielzahl von Übertragungskanälen repräsentativen Parameter durch einen Lernprozess berechnet werden.

5. Verarbeitungsverfahren nach Anspruch 4, **dadurch gekennzeichnet, dass** der Lernprozess bei der Initialisierung der Vielzahl von Übertragungskanälen durchgeführt wird.

6. Verarbeitungsverfahren nach einem der Ansprüche 4 und 5, **dadurch gekennzeichnet, dass** der Lernprozess während des Betriebs des Übertragungskanals wiederholt wird.

7. Verarbeitungsverfahren nach Anspruch 1, **dadurch gekennzeichnet, dass** der Schritt der adaptiven Korrektur das zusammengesetzte optische Signal im optischen Bereich korrigiert.

8. Verarbeitungsverfahren nach Anspruch 1, **dadurch gekennzeichnet, dass** es vor dem Schritt der adaptiven Korrektur einen Schritt der Umwandlung des zusammengesetzten optischen Signals in ein zusammengesetztes elektrisches Signal enthält, und dass der Schritt der adaptiven Korrektur das zusammengesetzte elektrische Signal im elektrischen Bereich korrigiert.

9. Verarbeitungsvorrichtung (140, 151, 161) eines zusammengesetzten optischen Signals (10, 20), das von einer Folge von Zeitsektoren geformt wird, die durch Zeitmultiplex einer Vielzahl von optischen Signalen (11 bis 13, 21 bis 23) erhalten werden, die auf einer Vielzahl von Übertragungskanälen (200 bis 203) eines gemeinsam genutzten optischen Zugangsnetzes (1) übertragen werden, wobei die Vorrichtung **dadurch gekennzeichnet ist, dass** sie die folgenden Mittel enthält:
- Berücksichtigung eines Sendezeitplans der Vielzahl von optischen Signalen im Zugangsnetz, wobei der Zeitplan einem Zeitsektor ein optisches Signal der Folge und einen Übertragungskanal der Vielzahl von Übertragungskanälen zuordnet, über den das optische Signal geht;
- Abrufen einer Gruppe von Parametern, die für Leistungen des dem Zeitsektor zugeordneten Übertragungskanals repräsentativ sind;
- Berechnung einer Gruppe von Korrekturparameterwerten ausgehend von der Gruppe von für die Leistungen des Kanals repräsentativen Parametern; und
- adaptive Korrektur des Zeitsektors mit Hilfe der Gruppe von Korrekturparametern.

10. Zentrale Einrichtung (100) eines gemeinsam genutzten optischen Zugangsnetzes (1) zwischen einer Vielzahl von Endeinrichtungen (301 bis 303), die ein erstes zusammengesetztes optisches Signal (10), das von einer Folge von Zeitsektoren geformt wird, die durch Zeitmultiplex einer ersten Vielzahl von optischen Signale erhalten werden, an die Vielzahl von Endeinrichtungen übertragen kann, **dadurch gekennzeichnet, dass** sie eine erste Verarbeitungsvorrichtung (140) des ersten zusammengesetzten optischen Signals (10) enthält, die Mittel enthält zur:
- Berücksichtigung eines Sendezeitplans (120) der Vielzahl von optischen Signalen im Zugangsnetz, wobei der Zeitplan einem Zeitsektor ein optisches Signal der Folge und einen Übertragungskanal der Vielzahl von Übertragungskanälen zuordnet, über den das optische Signal geht;
- Abrufung einer Gruppe von Parametern, die für Leistungen des dem Zeitsektor zugeordneten Übertragungskanals repräsentativ sind;
- Berechnung einer Gruppe von Korrekturparameterwerten ausgehend von der Gruppe von für die Leistungen des Kanals repräsentativen Parametern; und
- adaptiven Korrektur des Zeitsektors mit Hilfe der Gruppe von Korrekturparametern.

11. Zentrale Einrichtung (100) eines gemeinsam genutzten optischen Zugangsnetzes (1) nach Anspruch 10, die ein zweites zusammengesetztes Signal (20), das von einer Folge von Zeitsektoren geformt wird, die durch Zeitmultiplex einer zweiten Vielzahl von optischen Signalen (21 bis 23) erhalten werden, von der Vielzahl von Endeinrichtungen empfangen kann, **dadurch gekennzeichnet, dass** sie eine zweite Verarbeitungsvorrichtung (150, 151) des zweiten zusammengesetzten optischen Signals (20) enthält, die Mittel enthält zur:
- Berücksichtigung eines Sendezeitplans (120) der Vielzahl von optischen Signalen im Zugangsnetz, wobei der Zeitplan einem Zeitsektor ein optisches Signal der Folge und einen Übertragungskanal der Vielzahl von Übertragungskanälen zuordnet, über den das optische Signal geht;
- Abrufung einer Gruppe von Parametern, die für Leistungen des dem Zeitsektor zugeordneten Übertragungskanals repräsentativ sind;
- Berechnung einer Gruppe von Korrekturparameterwerten ausgehend von der Gruppe von für die Leistungen des Kanals repräsentativen Parametern; und
- adaptiven Korrektur des Zeitsektors mit Hilfe der Gruppe von Korrekturparametern.

12. Optisches Zugangsnetz (1), das von einer Vielzahl von Endeinrichtungen (251 bis 253) gemeinsam genutzt wird, die mit einer Zentraleinrichtung (100) über eine Vielzahl von Übertragungskanälen (200 bis 203) verbunden sind, wobei die Zentraleinrichtung (100) ein erstes zusammengesetztes Signal (10), das von einer Folge von Zeitsektoren geformt wird, die durch Zeitmultiplex einer ersten Vielzahl von optischen Signalen (11 bis 13) erhalten wird, an die Vielzahl von Endeinrichtungen (301 bis 303) übertragen kann, **dadurch gekennzeichnet, dass** die Zentraleinrichtung eine erste Korrekturvorrichtung (140) des ersten zusammengesetzten Signals (10) enthält, die Mittel enthält zur:
- Berücksichtigung eines Sendezeitplans (120) der Vielzahl von optischen Signalen im Zugangsnetz, wobei der Zeitplan einem Zeitsektor ein optisches Signal der Folge und einen Übertragungskanal der Vielzahl von Übertragungskanälen zuordnet, über den das optische Signal geht;
- Abrufung einer Gruppe von Parametern, die für Leistungen des dem Zeitsektor zugeordneten Übertragungskanals repräsentativ sind;
- Berechnung einer Gruppe von Korrekturparameterwerten ausgehend von der Gruppe von für die Leistungen des Kanals repräsentativen Parametern; und
- adaptiven Korrektur des Zeitsektors mit Hilfe der Gruppe von Korrekturparametern.

13. Gemeinsam genutztes optisches Zugangsnetz (1) nach Anspruch 12, bei dem die Zentraleinrichtung (100) ein zweites zusammengesetztes optisches Signal (20) empfangen kann, das von einer Folge von Zeitsektoren geformt wird, die durch Zeitmultiplex einer zweiten Vielzahl von optischen Signalen (21 bis 23) erhalten werden, die von der Vielzahl von Endeinrichtungen (301 bis 303) kommen, wobei die Zentraleinrichtung **dadurch gekennzeichnet ist, dass** sie eine zweite Korrekturvorrichtung (150, 151) des zweiten zusammengesetzten Signals enthält, die Mittel enthält zur:
- Berücksichtigung eines Sendezeitplans (120) der Vielzahl von optischen Signalen im Zugangsnetz, wobei der Zeitplan einem Zeitsektor ein optisches Signal der Folge und einen Übertragungskanal der Vielzahl von Übertragungskanälen zuordnet, über den das optische Signal geht;
- Abrufung einer Gruppe von Parametern, die für Leistungen des dem Zeitsektor zugeordneten Übertragungskanals repräsentativ sind;
- Berechnung einer Gruppe von Korrekturparameterwerten ausgehend von der Gruppe von für die Leistungen des Kanals repräsentativen Parametern; und
- adaptiven Korrektur des Zeitsektors mit Hilfe der Gruppe von Korrekturparametern.

14. Computerprogrammprodukt, das ausgehend von einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen für die Ausführung des Verarbeitungsverfahrens einer Vielzahl von optischen Signalen nach Anspruch 1 enthält, wenn es auf einem Computer ausgeführt wird.
